# EUROPEAN PATENT SPECIFICATION

(11) **EP 4 455 490 B1**
(45) Date of publication and mention of the grant of the patent: **11.02.2026**
(21) Application number: 22910535.8
(22) Date of filing: 17.10.2022
(51) Int. Cl.: F15B 15/10, B25J 15/00, B25J 15/12, B25J 9/14

(54) **GRIPPING DEVICE**
GREIFVORRICHTUNG
DISPOSITIF DE PRÉHENSION

(30) Priority: 20.12.2021 JP 2021205964
(43) Date of publication of application: 30.10.2024
(73) Proprietor: BRIDGESTONE CORPORATION, Chuo-ku Tokyo 104-8340 (JP)
(72) Inventor: ITOI, Dyta, Chuo-ku, Tokyo (JP)
(74) Representative: Marks & Clerk LLP
(86) International application number: PCT/JP2022/038510
(87) International publication number: WO 2023/119809

(56) References cited:
- JP-A- 2003 181 780
- JP-A- 2013 091 121
- JP-A- 2021 088 999
- JP-A- 2021 088 999
- JP-A- H07 205 081
- US-A- 3 343 864
- US-A1- 2018 271 386
- YUAN PEIZHENG ET AL: "Double Helical Soft Pneumatic Actuator Capable of Generating Complex 3D Torsional Motions", IEEE ROBOTICS AND AUTOMATION LETTERS, IEEE, vol. 6, no. 4, 6 August 2021 (2021-08-06), pages 8142 - 8149, XP011874620, [retrieved on 20210825], DOI: 10.1109/LRA.2021.3102940

## Description

### [Technical Field]

The present disclosure relates to a grasping device using a fluid pressure actuator that curves (curls) during contraction.

### [Background Art]

Conventionally, a structure (so-called McKibben type) having a rubber tube that expands and contracts by air pressure and a sleeve that covers the outer peripheral surface of the tube has been widely used as a fluid pressure actuator that expands and contracts the tube using gas or liquid.

Such a McKibben type fluid pressure actuator also has a known structure that curves (curls) during contraction (see Patent Literature 1). Specifically, Patent Literature 1 discloses a grasping device for grasping an object (which may be called a workpiece) by using a plurality of such fluid pressure actuators. Patent Literature 2 discloses a soft gripper that automatically surrounds and grips an object using air pressure.

### [Citation List]

### [Patent Literature]

[Patent Literature 1]
   Japanese Patent Laid-Open No. 2021-088999
[Patent Literature 2]
   US2018271386A1

### [Summary of Invention]

However, the above-described grasping device using a fluid pressure actuator has the following problems. Specifically, depending on the size, shape, or nature of the object, the curled fluid pressure actuator may not be able to grasp well.

Accordingly, the following disclosure is made in view of such a situation, and it is an object of the present invention to provide a grasping device capable of more reliably grasping an object while using a fluid pressure actuator that curves (curls) during contraction.

One aspect of the present disclosure is a grasping device (For example, grasping device 1) using a plurality of fluid pressure actuators (fluid pressure actuators 10) that are curved during contraction. The fluid pressure actuators are a flexible soft actuator, and the fluid pressure actuators are provided offset so as to intersect at least one of the other fluid pressure actuators on a proximal end portion (proximal end portion 200) side of the fluid pressure actuator. A tip portion (tip portion 300) of one of the fluid pressure actuators approaches a tip portion of the other fluid pressure actuators intersecting on the proximal end portion side when each of the fluid pressure actuators contracts.

### [Brief Description of Drawings]

[FIG. 1] FIGS. 1 (a) and 1 (b) are perspective views of a grasping device 1 according to the present embodiment.
[FIG. 2] FIGS. 2 (a) to 2 (d) are side views and bottom views of the grasping device 1.
[FIG. 3] FIG. 3 is a side view of a fluid pressure actuator 10.
[FIG. 4] FIG. 4 is a cross-sectional view of an actuator body portion 100 along a radial direction D_{R}.
[FIG. 5] FIG. 5 is an explanatory view of the behavior of the fluid pressure actuator 10.
[FIG. 6] FIG. 6 (a) and 6 (b) are perspective views of the grasping device 1A related to modified example.
[FIG. 7] FIG. 7 (a) to FIG. 7 (d) are side views and bottom views of the grasping device 1A.

### [Description of Embodiments]

Hereinafter, the embodiment will be described based on the drawings. The same functions and structures are denoted by the same or similar reference numerals, and the description thereof will be omitted accordingly.

### (1) Overall schematic configuration of the grasping device

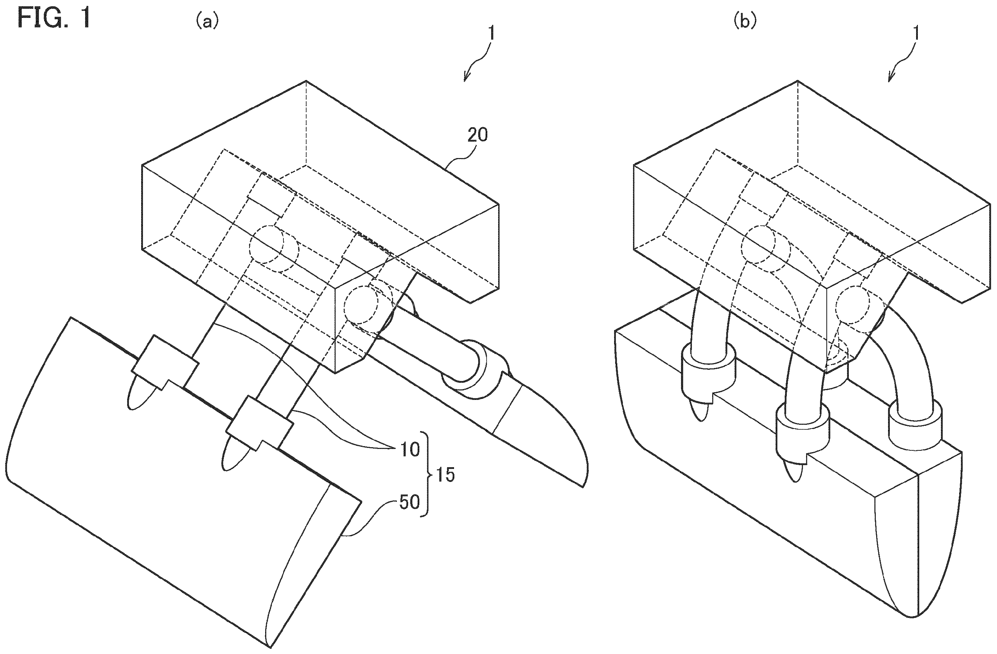

FIGS. 1 (a) and 1 (b) are perspective views of the grasping device 1 according to the present embodiment. Specifically, FIG. 1 (a) is a perspective view of the grasping device 1 when the fluid pressure actuator 10 is not contracted.

FIG. 1 (b) is a perspective view of the grasping device 1 during contraction of the fluid pressure actuator 10.

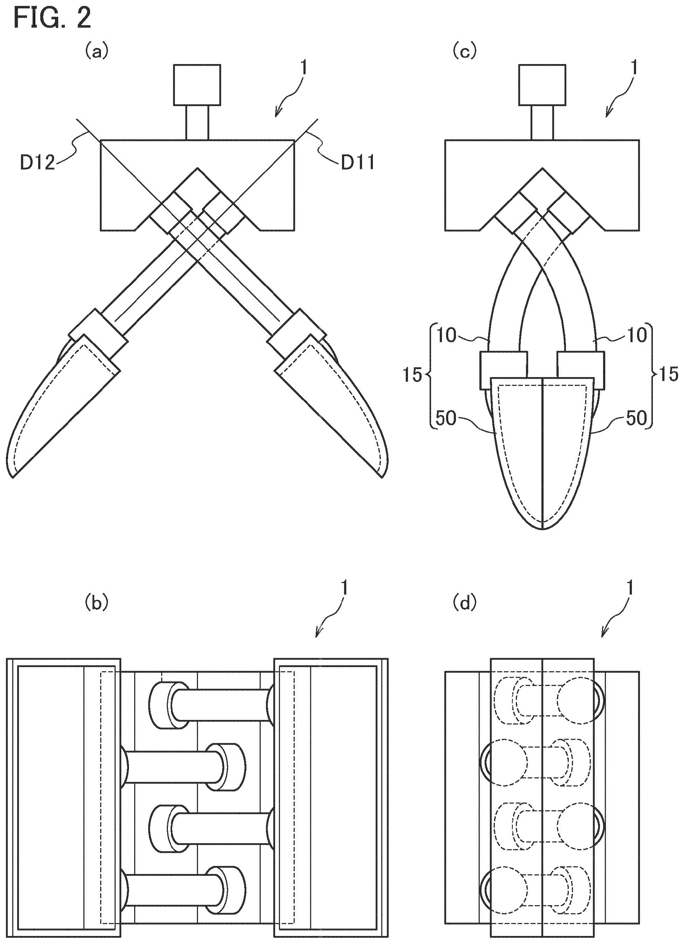

FIGS. 2 (a) to 2 (d) are side views and bottom views of the grasping device 1. Specifically, FIGS. 2 (a) and 2 (b) show side views and bottom views of the grasping device 1 (when the fluid pressure actuator 10 is not contracted), respectively. FIGS. 2 (c) and 2 (d) show side views and bottom views of the grasping device 1 (when the fluid pressure actuator 10 is contracted), respectively.

The grasping device 1 uses a plurality of fluid pressure actuators 10 (soft actuators that can be curved and have flexibility) that curve (curl) during contraction. The grasping device 1 can grasp an object (which may be called a workpiece) using a plurality of fluid pressure actuators 10. The grasping device 1 may be used as a robot hand or the like.

The grasping device 1 includes a grasping unit 15 and a mounting base 20. The grasping unit 15 is configured by the fluid pressure actuator 10 and a hook portion 50. Since the grasping device 1 functions as a robotic hand, it may be movably supported by a support portion (see FIGS. 2 (a) and 2 (c)).

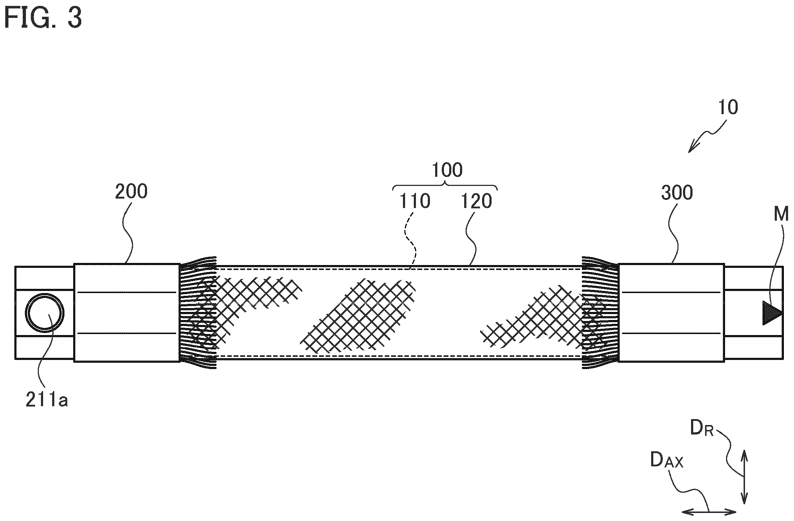

The fluid pressure actuator 10 is attached to the mounting base 20. Specifically, the proximal end portion 200 (Not shown in FIGS 1 and 2, see FIG 3) of the fluid pressure actuator 10 is attached to the mounting base 20.

The fluid pressure actuator 10 is attached to the mounting base 20 so as to face at least one other fluid pressure actuator 10.

Specifically, the fluid pressure actuator is provided offset so as to intersect at least any other fluid pressure actuator on the proximal end portion 200 side of the fluid pressure actuator. More specifically, the fluid pressure actuators are provided offset from each other in a direction orthogonal to the axial direction D_{AX} (see FIG. 3) of the fluid pressure actuator 10 in the bottom view of the grasping device 1 so as not to interfere with other fluid pressure actuators.

When each of the fluid pressure actuators contracts, the tip portions 300 (see FIG. 3) of the fluid pressure actuator approach the tip portions 300 of other fluid pressure actuators intersecting on the proximal end portion 200 side. That is, when the fluid pressure actuators are curved, the distance with the tip portions 300 of other fluid pressure actuators intersecting becomes narrow, and the object can be grasped.

The plurality of fluid pressure actuators may configure a pair of the fluid pressure actuator 10 provided along the direction D11 (first direction) and the fluid pressure actuator 10 provided along the direction D12 (second direction) intersecting the direction D11.

The grasping device 1 is configured by two pairs of fluid pressure actuators (four fluid pressure actuators in total). The grasping device preferably includes at least two pairs of fluid pressure actuators.

The tip portion 300 of the fluid pressure actuator 10 is provided with a hook portion 50. The hook portion 50 is provided across the tip portion 300 of the plurality of fluid pressure actuators 10 and extends in the axial direction D_{AX} of the fluid pressure actuator 10.

In the present embodiment, the hook portion 50 has a concave part so as to hold a scooped object by operating (contracting and expanding) the fluid pressure actuator 10. The grasping unit 15 including the hook portion 50 may be referred to in other similar terms such as shovel, cup, bucket, etc.

### (2) Schematic configuration of the fluid pressure actuator

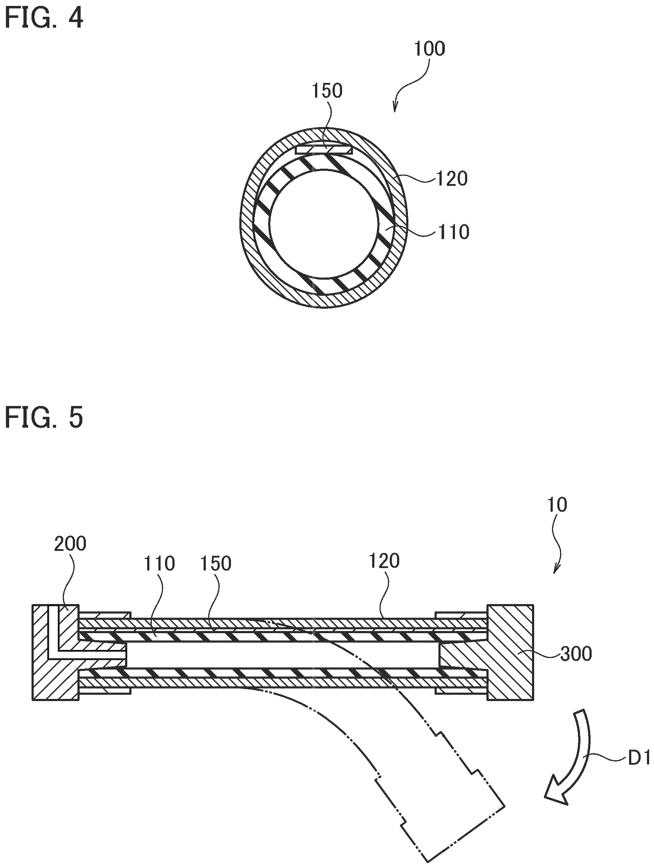

FIG. 3 is a side view of the fluid pressure actuator 10 according to the present embodiment. FIG. 4 is a cross-sectional view of the actuator body portion 100 along the radial direction D_{R}.

The fluid pressure actuator 10 has the actuator body portion 100, the proximal end portion 200 and the tip portion 300.

The actuator body portion 100 is composed of a tube 110 and a sleeve 120. Fluid flows into the actuator body portion 100 through a connection port 211a.

As a basic characteristic, the actuator body portion 100 contracts in the axial direction D_{AX} of the actuator body portion 100 and expands in the radial direction D_{R} due to fluid flow into the tube 110. The actuator body portion 100 expands in the axial direction D_{AX} of the actuator body portion 100 and contracts in the radial direction D_{R} due to fluid flow out of the tube 110. Due to the shape change of the actuator body portion 100, the fluid pressure actuator 10 functions as an actuator.

In the present embodiment, while using a McKibben type fluid pressure actuator having such basic characteristics, by providing a (may be referred to as regulating or restricting) restricting member 150 (Not shown in FIG. 3, see FIGS. 4, 5, etc.) that restricts compression of the axial direction D_{AX}, it can be curved (curled) in an orthogonal direction orthogonal to the axial direction D_{AX}, that is, in the radial direction D_{R}.

The fluid used to drive the fluid pressure actuator 10 may be either a gas such as air or a liquid such as water or mineral oil, but in particular, the fluid pressure actuator 10 may have high durability that can withstand hydraulic drive with high pressure applied to the actuator body portion 100.

The connection port 211a is attached to a drive pressure source for the fluid pressure actuator 10, specifically a hose (pipeline) connected to a gas or liquid compressor. The fluid that flows through the connection port 211a flows through the passage hole (not shown) into the actuator body portion 100, specifically into the tube 110.

The tube 110 is a cylindrical body that expands and contracts under fluid pressure. The tube 110 is made of an elastic material such as butyl rubber to repeatedly contract and expand under fluid pressure. When the fluid pressure actuator 10 is hydraulically driven, it is preferable that it be at least one type selected from the group consisting of NBR (nitrile rubber), chloroprene rubber, and epichlorohydrin rubber having high oil resistance.

The sleeve 120 is cylindrical and covers the outer peripheral surface of the tube 110. The sleeve 120 is a stretchable structure in which fiber cords oriented in a predetermined direction are woven, and a rhombic shape is repeated by crossing the oriented cords. By having such a shape, the sleeve 120 deforms pantographically and follows the tube 110 while restricting its contraction and expansion.

As a cord constituting the sleeve 120, a fiber cord of an aromatic polyamide (aramid fiber) or polyethylene terephthalate (PET) is preferably used. However, it is not limited to this kind of fiber cord, but may be a cord of a high-strength fiber such as a PBO fiber (polyparaphenylene benzobisoxazole), for example.

In this embodiment, the restricting member 150 is provided between the tube 110 and the sleeve 120.

The restricting member 150 is not compressed in the axial direction D_{AX}, and can be deformed only along the radial direction D_{R} (which may be called the deflection direction). That is, the restricting member 150 resists compression along the axial direction D_{AX} and is deformable in an orthogonal direction (radial direction D_{R}) orthogonal to the axial direction D_{AX}.

In other words, the restricting member 150 has a characteristic that is difficult to deform along the axial direction D_{AX} and deflects along the radial direction D_{R}. Deformable may be alternatively referred to as curving or curling. s

The restricting member 150 also has a function of restricting (restraining) the expansion of the tube 110 (and the sleeve 120) to the radial direction D_{R} outside at a position on the outer periphery of the tube 110 where the restricting member 150 is provided.

In this embodiment, the restricting member 150 is provided from one end side to the other end side of the axial direction D_{AX} in the space of inside of the sleeve 120, specifically, the radial inside of the sleeve 120. In this embodiment, the restricting member 150 is formed by using a leaf spring.

The size of the leaf spring may be selected according to the size of the fluid pressure actuator 10, the required generating force, etc., and is not particularly limited. The material of the leaf spring is also not particularly limited, but typically it may be a material that is easy to curve and resistant to compression, such as a metal such as stainless steel. For example, the restricting member 150 may be formed of a thin sheet of carbon fiber reinforced plastic (CFRP) or the like. Since the CFRP is less likely to undergo plastic deformation than a metal, it is easy for the fluid pressure actuator 10 to return to its original straight state after curving.

The proximal end portion 200 is located on the base portion 20 side. The connection port 211a described above is formed on the proximal end portion 200. The proximal end portion 200 may include a mechanism for sealing one end portion of the axial direction D_{AX} of the actuator body portion 100.

The tip portion 300 is located on the opposite side of the proximal end portion 200 on the base portion 20 side. The tip portion 300 may be provided with a mechanism for sealing the other end portion of the axial direction D_{AX} of the actuator body portion 100.

The sealing mechanism of the actuator body portion 100 provided in the proximal end portion 200 and the tip portion 300 may be similar to, for example, the fluid pressure actuator disclosed in Japanese Patent Laid-Open Publication No. 2021-088999.

### (3) Behavior of the fluid pressure actuator 10

FIG. 5 is an explanatory view of the behavior of the fluid pressure actuator 10. The fluid pressure actuator 10 shown in FIG. 5 is fixed to the proximal end portion 200 side, and the tip portion 300 side is freely movable. That is, the proximal end portion 200 side is a fixed end, and the tip portion 300 side is a free end.

As described above, when the fluid flows into the fluid pressure actuator 10, it attempts to contract in the axial direction D_{AX}, but since the restricting member 150 is provided, the contraction along the axial direction D_{AX} is restricted (constrained).

That is, the restricting member 150 formed by a rigid member such as a leaf spring serves as a backbone, and expands in the radial direction D_{R} outside on the opposite side (lower side in FIG. 5) to the position on the outer periphery of the tube 110 and sleeve 120 where the restricting member 150 is provided, thereby shortening the dimension of the fluid pressure actuator 10 in the axial direction D_{AX} and deflecting the fluid pressure actuator 10 (Specifically, the actuator body portion 100) along the direction D1. Note that the direction D1 may be called a flexible direction. In order to make it easy to recognize that the fluid pressure actuator 10 is bent in the direction D1, a mark M (see FIG. 3) may be provided to indicate the position where the restricting member 150 is provided.

The restricting member 150 is provided between the rubber made tube 110 and the sleeve 120, resists compression in the axial direction D_{AX}, is deformable along the orthogonal direction (radial direction D_{R}) orthogonal to, and is arranged in a part in the circumferential direction of the actuator body portion 100.

That is, when the actuator body portion 100 (McKibben) attempts to contract along the axial direction D_{AX} due to the inflow (pressurization) of fluid into the actuator body portion 100, the portion of the restricting member 150 has high compressive rigidity, and therefore, the portion where the restricting member 150 is arranged cannot contract. On the other hand, since the portion of the other actuator body portion 100 attempts to contract, a force in the curving direction along the orthogonal direction (radial direction D_{R}) is generated, and the portion is curved with the restricting member 150 as the back face.

### (4) Modified example

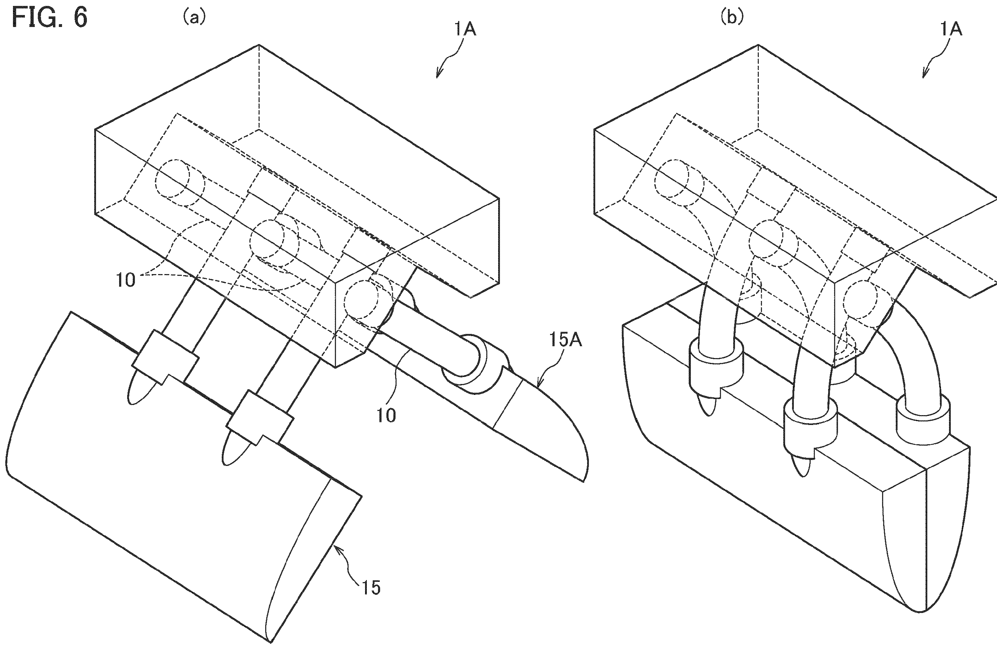

Next, modified example of the grasping device 1 will be described. FIGS. 6 (a) and 6 (b) are perspective views of the grasping device 1A related to modified example. Specifically, FIG. 6 (a) is a perspective view of the grasping device 1A when the fluid pressure actuator 10 is not contracted. FIG. 6 (b) is a perspective view of the grasping device 1A when the fluid pressure actuator 10 is contracted.

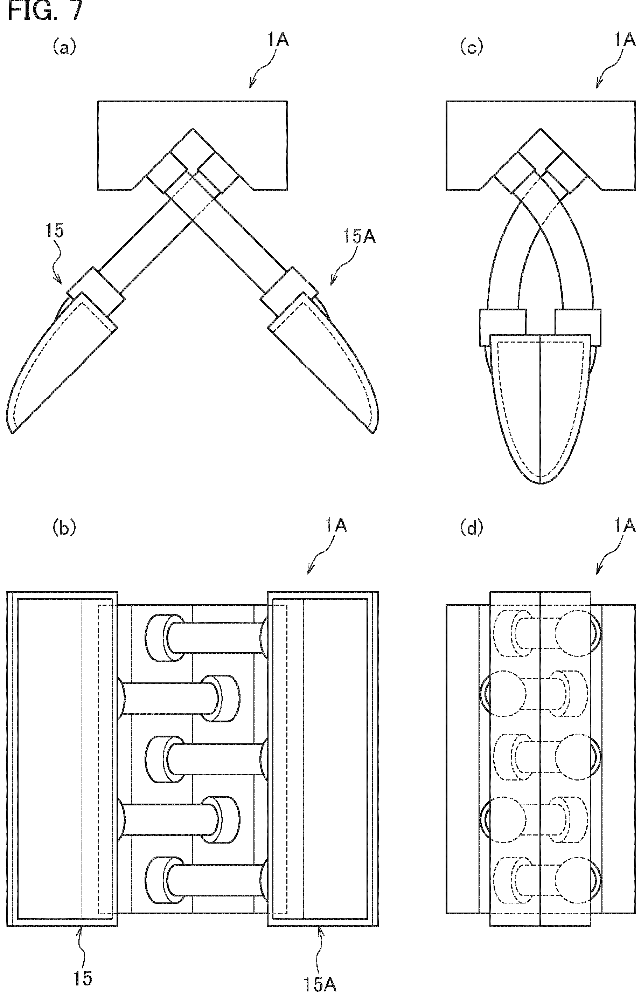

FIGS. 7 (a) to FIG. 7 (d) are side views and bottom views of the grasping device 1A. Specifically, FIGS. 7 (a) and FIG. 7 (b) show side views and bottom views of the grasping device 1A (when the fluid pressure actuator 10 is not contracted), respectively. FIGS. 7 (c) and FIG. 7 (d) show side views and bottom views of the grasping device 1A (when the fluid pressure actuator 10 is contracted), respectively.

The grasping device 1A includes a grasping unit 15 and a grasping unit 15 A. Like the grasping device 1, the grasping unit 15 is composed of two fluid pressure actuators 10 and a hook portion 50 (Strictly speaking, the grasping unit 15 of the grasping device 1 may differ in at least one of size or connection position of the fluid pressure actuator 10).

On the other hand, the grasping unit 15 A is composed of three fluid pressure actuators 10 and a hook portion 50.

### (5) Functions and Effects

According to the above-described embodiment, the following function and effects can be obtained. Specifically, according to the grasping device 1 (and grasping device 1A) including modified example described above, the fluid pressure actuator 10 is provided offset so as to intersect at least any other fluid pressure actuator 10 on the proximal end portion 200 side. When each of the fluid pressure actuators 10 contracts, the tip portion 300 of the fluid pressure actuator 10 approaches the tip portion 300 of the other fluid pressure actuator that intersects on the proximal end portion 200 side. The hook portion 50 is provided at the tip portion 300 of the fluid pressure actuator 10.

Therefore, the grasping unit 15 can grasp the object in a wider range. Thus, the object can be grasped more reliably regardless of the size, shape or nature of the object. In particular, the object can be grasped more reliably even if the shape of the object changes when it is held and lifted (For example, rice bags).

In the grasping device 1 (and the grasping device 1A), a pair of the fluid pressure actuator 10 provided along the direction D11 and the fluid pressure actuator 10 provided along the direction D12 intersecting the direction D11 is configured, and the grasping device 1 may include at least 2 pairs of the fluid pressure actuator 10. Therefore, the object can be securely grasped in a wider range.

Further, in the grasping device 1 A, one more fluid pressure actuator 10 is added (grasping unit 15 A) to the two pairs of fluid pressure actuators 10. Therefore, even when the object is grasped through the hook portion 50, twisting in the grasping direction is difficult, and the object can be grasped more surely.

### (6) Other embodiments

For example, the grasping device 1 and the grasping device 1A were provided with at least 2 pairs of fluid pressure actuators 10, but the grasping device may be configured with 1 pair of fluid pressure actuators 10. In addition, the hook portion 50 provided across the tip portion 300 of the plurality of fluid pressure actuators 10 is not necessarily required.

In the above-described embodiment, the flexibility of the fluid pressure actuator is ensured using the restricting member 150, but the flexibility of the fluid pressure actuator may be ensured by another structure. For example, by providing a flexible frame material having a part of a bellows shape around the fluid pressure actuator, when the fluid pressure actuator contracts, the fluid pressure actuator is curved such that the bellows portion faces toward an inside.

### [Reference Signs List]

1, 1A Grasping device
10 Fluid pressure actuator
15, 15 A Grasp unit
20 Mounting base
50 Hook portion
100 Actuator body portion
110 Tube
120 Sleeve
150 Restricting member
200 Proximal end portion
211a Connection port
300 Tip portion

## Claims

1. A grasping device (1) comprising:
a plurality of fluid pressure actuators (10) that are curved when each of the fluid pressure actuators (10) contracts;
a mounting base (20); and
a first hook portion and a second hook portion (50) for grasping an object, wherein
each of the fluid pressure actuators (10) is a flexible soft actuator,
each of the fluid pressure actuators (10) has a proximal end portion (200) and a tip portion (300),
each of the proximal end portions (200) is attached to the mounting base (20),
in a side view of the grasping device (1) when viewed along a direction orthogonal to an axial direction (D_{AX}) of a fluid pressure actuator (10), the some of the fluid pressure actuators (10) intersect the others of the fluid pressure actuators (10) on the proximal end portion (200) side of the fluid pressure actuators (10),
the tip portions (300) of the some of the fluid pressure actuators (10) approach the tip portions (300) of the others of the fluid pressure actuators (10) when each of the fluid pressure actuators (10) contracts, **characterised in that**
the fluid pressure actuators (10) are provided offset from each other in the direction orthogonal to the axial direction (DAX) of the fluid pressure actuator (10), and
each of the tip portions (300) of some of the fluid pressure actuators (10) is located on the first hook portion (50) and each of the tip portions (300) of other fluid pressure actuators (10) is located on the second hook portion (50).

2. The grasping device (1) according to claim 1, wherein
each of the fluid pressure actuators (10) comprises:
a tube (110) that is cylindrical, and expands and contracts under fluid pressure; and
a sleeve (120) that has a stretchable structure in which fiber cords oriented in a predetermined direction are woven and covers an outer peripheral surface of the tube (110).

3. The grasping device (1) according to claim 2, wherein each of the fluid pressure actuators (10) comprises a restricting member (150) provided in the sleeve (120) from one end to another end in the axial direction (D_{AX}) of the tube (110).

## Patentansprüche

1. Greifvorrichtung (1), umfassend:
eine Vielzahl von Fluiddruckaktuatoren (10), die gekrümmt sind, wenn sich jeder der Fluiddruckaktuatoren (10) zusammenzieht;
eine Montagebasis (20); und
einen ersten Hakenabschnitt und einen zweiten Hakenabschnitt (50) zum Greifen eines Gegenstands, wobei
jeder der Fluiddruckaktuatoren (10) ein flexibler weicher Aktuator ist,
jeder der Fluiddruckaktuatoren (10) einen proximalen Endabschnitt (200) und einen Spitzenabschnitt (300) aufweist,
jeder der proximalen Endabschnitte (200) an der Montagebasis (20) befestigt ist,
in einer Seitenansicht der Greifvorrichtung (1), wenn sie entlang einer Richtung orthogonal zu einer Axialrichtung (D_{AX}) eines Fluiddruckaktuators (10) betrachtet wird, einige der Fluiddruckaktuatoren (10) die anderen der Fluiddruckaktuatoren (10) auf der Seite des proximalen Endabschnitts (200) der Fluiddruckaktuatoren (10) schneiden,
die Spitzenabschnitte (300) einiger der Fluiddruckaktuatoren (10) sich den Spitzenabschnitten (300) der anderen Fluiddruckaktuatoren (10) nähern, wenn sich jeder der Fluiddruckaktuatoren (10) zusammenzieht, **dadurch gekennzeichnet, dass**
die Fluiddruckaktuatoren (10) in der Richtung orthogonal zur Axialrichtung (D_{AX}) des Fluiddruckaktuators (10) zueinander versetzt vorgesehen sind, und
jeder der Spitzenabschnitte (300) einiger der Fluiddruckaktuatoren (10) sich auf dem ersten Hakenabschnitt (50) befindet und jeder der Spitzenabschnitte (300) anderer Fluiddruckaktuatoren (10) sich auf dem zweiten Hakenabschnitt (50) befindet.

2. Greifvorrichtung (1) nach Anspruch 1, wobei
jeder der Fluiddruckaktuatoren (10) umfasst:
ein Rohr (110), das zylindrisch ist und sich unter Flüssigkeitsdruck ausdehnt und zusammenzieht; und
eine Hülse (120), die eine dehnbare Struktur aufweist, in die in einer vorgegebenen Richtung ausgerichtete Faserschnüre eingewebt sind, und die eine äußere Umfangsfläche des Rohrs (110) bedeckt.

3. Greifvorrichtung (1) nach Anspruch 2, wobei jeder der Fluiddruckaktuatoren (10) ein Begrenzungselement (150) umfasst, das in der Hülse (120) von einem Ende zum anderen Ende in der Axialrichtung (D_{AX}) des Rohrs (110) vorgesehen ist.

## Revendications

1. Dispositif de préhension (1) comprenant :
une pluralité d'actionneurs de pression de fluide (10) qui sont courbés lorsque chacun des actionneurs de pression de fluide (10) se contracte ;
une base de montage (20) ; et
une première partie de crochet et une seconde partie de crochet (50) pour saisir un objet, dans lequel
chacun des actionneurs de pression de fluide (10) est un actionneur souple et flexible,
chacun des actionneurs de pression de fluide (10) présente une partie d'extrémité proximale (200) et une partie de pointe (300),
chacune des parties d'extrémité proximales (200) est fixée à la base de montage (20),
dans une vue latérale du dispositif de préhension (1) lorsqu'il est observé le long d'une direction orthogonale à une direction axiale (D_{AX}) d'un actionneur de pression de fluide (10), certains des actionneurs de pression de fluide (10) croisent les autres des actionneurs de pression de fluide (10) du côté de la partie d'extrémité proximale (200) des actionneurs de pression de fluide (10),
les parties de pointe (300) de certains des actionneurs de pression de fluide (10) se rapprochent des parties de pointe (300) des autres actionneurs de pression de fluide (10) lorsque chacun des actionneurs de pression de fluide (10) se contracte, **caractérisé en ce que**
les actionneurs de pression de fluide (10) sont disposés décalés les uns par rapport aux autres dans la direction orthogonale à la direction axiale (D_{AX}) de l'actionneur de pression de fluide (10), et
chacune des parties de pointe (300) de certains des actionneurs de pression de fluide (10) est située sur la première partie de crochet (50) et chacune des parties de pointe (300) d'autres actionneurs de pression de fluide (10) est située sur la seconde partie de crochet (50).

2. Dispositif de préhension (1) selon la revendication 1, dans lequel
chacun des actionneurs de pression de fluide (10) comprend :
un tube (110) qui est cylindrique et qui se dilate et se contracte sous la pression du fluide ; et
un manchon (120) qui présente une structure extensible dans laquelle des cordons de fibres orientés dans une direction prédéterminée sont tissés et recouvre une surface périphérique externe du tube (110).

3. Dispositif de préhension (1) selon la revendication 2, dans lequel chacun des actionneurs de pression de fluide (10) comprend un élément de restriction (150) disposé dans le manchon (120) d'une extrémité à l'autre extrémité dans la direction axiale (D_{AX}) du tube (110).
